(19) Europäisches Patentamt
European Patent Office
Office européen des brevets

(11) **EP 2 942 646 B1**

(12) **FASCICULE DE BREVET EUROPEEN**

(45) Date de publication et mention de la délivrance du brevet:
**25.01.2017 Bulletin 2017/04**

(51) Int Cl.:
***G01S 19/42*** *(2010.01)*

(21) Numéro de dépôt: **15164654.4**

(22) Date de dépôt: **22.04.2015**

(54) **PROCÉDÉ DE DÉTERMINATION DE LA POSITION D'UN RÉCEPTEUR DE SYSTÈME DE NAVIGATION PAR SATELLITES, ET SYSTÈME ASSOCIÉ**

VERFAHREN ZUR BESTIMMUNG DER POSITION EINES SATELLITENNAVIGATIONSEMPFÄNGERS, UND ENTSPRECHENDES SYSTEM

METHOD FOR DETERMINING THE POSITION OF A RECEIVER OF A SATELLITE NAVIGATION SYSTEM, AND RELATED SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.04.2014 FR 1401008**

(43) Date de publication de la demande:
**11.11.2015 Bulletin 2015/46**

(73) Titulaire: **THALES**
**92400 Courbevoie (FR)**

(72) Inventeurs:
• **Calmettes, Thibaud**
**31450 Montgiscard (FR)**
• **Carrie, Guillaume**
**31190 Grepiac (FR)**
• **Kubrak, Damien**
**31400 Toulouse (FR)**

(74) Mandataire: **Brunelli, Gérald**
**Marks & Clerk France**
**Immeuble Visium**
**22, avenue Aristide Briand**
**94117 Arcueil Cedex (FR)**

(56) Documents cités:
**EP-A1- 2 037 290     US-A1- 2004 008 139
US-A1- 2011 084 878**

• **GROVES PAUL D ET AL: "Intelligent Urban Positioning using Multi-Constellation GNSS with 3D Mapping and NLOS Signal Detection", GNSS 2012 - PROCEEDINGS OF THE 25TH INTERNATIONAL TECHNICAL MEETING OF THE SATELLITE DIVISION OF THE INSTITUTE OF NAVIGATION (ION GNSS 2012), THE INSTITUTE OF NAVIGATION, 8551 RIXLEW LANE SUITE 360 MANASSAS, VA 20109, USA, 21 septembre 2012 (2012-09-21), pages 458-472, XP056008365,**

**Description**

L'invention porte sur un procédé de détermination de la position d'un récepteur de système de navigation par satellites, et un système associé.

Il est important d'améliorer la robustesse des systèmes de navigation par satellites à forte contrainte d'intégrité à des environnements radio-électriques perturbés, de manière volontaire ou involontaire. Ceci concerne en particulier les applications de transport, terrestre, ferroviaire et aérien.

Il est connu d'introduire des "marges" sur le domaine d'incertitude de position, notamment pour un système d'augmentation spatial ou SBAS comme acronyme de "satellite-based augmentation system" en langue anglaise pour l'aviation.

Cette approche n'est satisfaisante que dans des environnements relativement ouverts (peu de masques) et faiblement perturbés, mais pas dans des environnements plus critiques.

Il est également connu de mettre en place des rejets, par exemple dans le cas d'algorithmes de détection et de rejet de multi-trajets dans les environnements sol, en mono ou en multi-antennes, et en mono ou multi-constellations.

Cette approche présente la difficulté de conduire à une forte ambiguïté entre bruit et perturbation, elle ne permet pas vraiment une caractérisation fine des nuisances, et l'approche de rejet simple, notamment en cas de fausse alarme, peut créer des problèmes de disponibilité.

Il est également connu des procédés de détermination de la position d'un récepteur de système de navigation par satellites dans lequel on utilise une pondération probabiliste des signaux reçus, comme illustrés dans les document EP 2037290 A1 ou le document US 2004/0008139 A1.

Un but de l'invention est de pallier les inconvénients précédemment cités.

Un but de l'invention est de d'améliorer la robustesse des systèmes de navigation par satellites.

Aussi, il est proposé, selon un aspect de l'invention, un procédé de détermination de la position d'un récepteur de système de navigation par satellites dans lequel on utilise une pondération probabiliste des signaux reçus, ladite pondération utilisant un coefficient $K_i$, pour chaque satellite d'indice i, ledit coefficient $K_i$ étant un produit de facteurs comprenant chacun une probabilité d'existence d'une perturbation, ledit coefficient $K_i$ étant un produit de facteurs comprenant chacun une probabilité d'existence d'une perturbation, ledit coefficient $K_i$, pour chaque satellite d'indice i, comprenant au moins un facteur de la forme $\left(1 - P_j^i\right)^{a_i}$, variant de 1 à 6 dans laquelle:

$P_1^i$ représente, pour le satellite d'indice i, une première probabilité que le signal reçu comprenne une combinaison d'une composante de signal non réfléchi et d'une composante de signal multi-trajet,

$P_2^i$ représente, pour le satellite d'indice i, une deuxième probabilité que le signal reçu comprenne uniquement une composante de signal multi-trajet,

$P_3^i$ représente, pour le satellite d'indice i, une troisième probabilité que le signal reçu soit brouillé par une interférence terrestre,

$P_4^i$ représente, pour le satellite d'indice i, une quatrième probabilité que le signal reçu comprenne une combinaison d'une composante d'un signal généré par un brouilleur au sol et d'une composante du signal nominal,

$P_5^i$ représente, pour le satellite d'indice i, une cinquième probabilité que le signal reçu ne soit pas en cohérence avec des conditions de réception précédentes dudit signal,

$P_6^i$ représente, pour le satellite d'indice i, une sixième probabilité que le signal reçu ne soit pas en cohérence avec une cartographie des environs, et

$a_i$ représente un réel positif.

Ainsi, il est possible de prendre en compte simplement et efficacement des modèles de perturbation dans la résolution de la position du récepteur, en évaluant la probabilité de perturbation, et d'intégrer automatiquement ces modèles dans le calcul de position et dans le calcul d'intégrité.

Une pondération $K_i$ de cette forme permet de concaténer dans une même formulation les informations sur toutes les sources de perturbations identifiables, ce qui permet son utilisation simple par réjection brute et/ou par pondération de mesure tel que vu ci-dessus. Un autre avantage est d'être cumulative, et donc de permettre la prise en compte de phénomènes flous ou difficilement identifiables : même si le calcul des probabilités ne permet pas de mettre en évidence de manière certaine un type de perturbation (aucune probabilité n'est égal à 100%), plusieurs indicateurs peuvent être perturbés (plusieurs $P_j^i$ $(j \in [\![1 ; 6]\!])$ seront au-dessus de 0%) et donc la notation globale $K_i$ peut tout de même être réduite.

Dans un mode réalisation, lorsqu'un coefficient $K_i$ est inférieur à un premier seuil, ladite détermination de la position du récepteur de système de navigation par satellites écarte les signaux reçus du satellite d'indice i.

Ainsi, il est possible d'éliminer des signaux pour lesquels la perturbation est considérée certaine ou quasi-certaine.

Selon un mode de réalisation, ladite détermination de la position du récepteur de système de navigation par satellites utilise une pondération des mesures des signaux émis par lesdits satellites de valeur respective $1/K_i$.

Ainsi, le traitement de localisation privilégie, dans la résolution du point ou position du récepteur, les mesures les plus probablement non perturbées. En outre, la somme des pondérations sur tous les satellites utilisés contribue à créer un niveau de confiance, utilisé notamment pour établir l'intégrité. En intégrant ces $1/K_i$ forcément supérieurs ou égaux à 1, on augmente la somme des pondérations et donc le niveau de confiance pour prendre en compte la probabilité de perturbation dès que celle-ci est non nulle.

Dans un mode de réalisation, la première probabilité $P_1^i$, pour le satellite d'indice i, que le signal reçu comprenne une combinaison d'une composante de signal non réfléchi et d'une composante de signal multi-trajet, utilise simultanément une boucle de poursuite de retard basée sur un discriminant tôt/tard d'écartement étroit, une boucle de poursuite de retard basée sur un discriminant tôt/tard d'écartement normal, et un écart entre les délais évalués par lesdites boucles.

Ainsi, si le multi-trajet est plus grand que l'écartement du discriminant tôt/tard d'écartement étroit, il apparaît une différence entre les deux sorties ou deux poursuites : la poursuite étroite va continuer à suivre le trajet direct, alors que la poursuite normale va voir une combinaison du trajet direct et du trajet réfléchi. Si le multi-trajet est plus petit que l'écartement du discriminant tôt/tard d'écartement étroit, la détection ne va pas fonctionner puisque les deux poursuites sont affectées de même, mais on considère pour limiter cet effet un écartement étroit suffisamment petit pour que l'impact du multi-trajet soit acceptable (typiquement inférieur au mètre). Cette mesure de l'écart entre les deux poursuites permet donc bien de construire une métrique pour la détection des multi-trajets avec signal direct.

Le discriminant tôt/tard correspond à la différence entre la corrélation à un instant en avance par rapport au signal et la corrélation à un instant en retard par rapport au signal. Il permet de suivre l'évolution de la synchronisation et correspond à la mesure de la boucle de poursuite en rythme (ou DLL pour acronyme de "Delay Locked Loop" en langue anglaise). De manière classique, on considère un écartement des deux corrélations (soit en avance, soit en retard) d'un demi-chip, puisque c'est ce qui offre la meilleure performance en environnement gaussien. Cependant, dans le cas notamment de multi-trajets qui peuvent ajouter une contribution entre 0 et 0.5 chip, on peut s'intéresser également au discriminant appliqué pour un écartement des deux corrélations (soit en avance, soit en retard) plus petit, par exemple de 0.1 chip. Si une différence notable apparaît entre les deux, c'est a priori le signe d'un multi-trajet de décalage entre 0.1 chip et 0.5 chip qui affecte le discriminant tôt/tard classique sur 0.5 chip mais pas le discriminant tôt/tard réduit sur 0.1 chip.

Selon un mode de réalisation, la deuxième probabilité $P_2^i$, pour le satellite d'indice i, que le signal reçu comprenne uniquement une composante de signal multi-trajet, utilise simultanément une boucle de poursuite de retard basée sur un discriminant tôt/tard d'écartement étroit, une boucle de poursuite de retard basée sur un discriminant tôt/tard d'écartement normal, et une variation temporelle d'un écart entre les délais évalués par lesdites boucles.

Ainsi, à la différence de $P_1^i$, il n'y a pas de trajet direct, de sorte qu'il n'y a plus de signal utile dans l'intervalle observé par le discriminant d'écartement étroit. La poursuite associée finit par diverger, tandis que le discriminant d'écartement normal reste accroché sur le multi-trajet. Aussi, une métrique associée au décrochement relatif permet bien de rendre compte de la perturbation.

Dans un mode de réalisation, la troisième probabilité $P_3^i$, pour le satellite d'indice i, que le signal reçu soit brouillé par une interférence terrestre utilise un écart entre une mesure du rapport de la puissance du signal utile reçu sur la puissance du bruit sur le signal reçu et une estimation attendue du rapport de la puissance du signal utile reçu sur la puissance du bruit sur le signal reçu. Une diminution du rapport signal à bruit peut provenir soit d'une interférence, soit d'un masquage ou autre atténuation. Il est alors possible d'améliorer le modèle de ladite estimation attendue en incluant dans celle-ci les masquages et autres atténuations connues par une cartographie (notamment 3D).

Ainsi, il est possible d'observer une diminution du rapport signal à bruit provenant d'une interférence.

Selon un mode de réalisation, la quatrième probabilité $P_4^i$, pour le satellite d'indice i, que le signal reçu comprenne une combinaison d'une composante d'un signal généré par un brouilleur au sol et d'une composante du signal nominal utilise un écart entre une mesure de résidu de pseudo-distance et une estimation attendue de résidu de pseudo-distance.

Il est ainsi possible d'observer l'incohérence, en valeur absolue (biais), d'un signal par rapport à la localisation estimée.

Selon un mode de réalisation, la cinquième probabilité $P_5^i$, pour le satellite d'indice i, que le signal reçu ne soit pas en cohérence avec des conditions de réception précédentes dudit signal utilise une variation de la variance des résidus des pseudo-distances desdits satellites.

Il est ainsi possible d'observer l'incohérence au cours du temps , ou bruit, d'un signal par rapport à la localisation estimée. Il existe deux cas suspects :

- soit la variance diminue fortement, et cela signifie :

  - soit que le signal était perturbé par un multi-trajet diffus et qu'il est passé à un multi-trajet réfléchi : cas très fréquent en environnement urbain.
  - soit que le signal était reçu dans des conditions "normales" légèrement bruitées, mais qu'il est maintenant reçu dans des conditions parfaites, comme un leurre pourrait les générer.

- soit la variance augmente fortement, ce qui signifie l'entrée dans un environnement perturbé.

Dans un mode de réalisation, la sixième probabilité $P_6^i$, pour le satellite d'indice i, que le signal reçu ne soit pas en cohérence avec une cartographie des environs utilise un écart entre la puissance mesurée du signal reçu du satellite d'indice i et une estimation attendue de la puissance du signal reçu du satellite d'indice i.

Ainsi, en considérant la puissance, il est avantageusement possible de prendre en compte des effets de niveaux reçus trop forts (les signaux devraient être reçus masqués et ne le sont pas (erreur de position)), ou de prendre en compte des signaux qui devraient être reçus trop faibles et dont on reçoit à la place un signal de leurre), ou de prendre en compte des effets de niveaux reçus trop faibles (les signaux devraient pas être reçus masqués et le sont (erreur de position)).

Selon un autre aspect de l'invention, il est également proposé un système de détermination de la position d'un récepteur de système d'un système de navigation par satellites, adapté pour mettre en oeuvre le procédé tel que décrit précédemment.

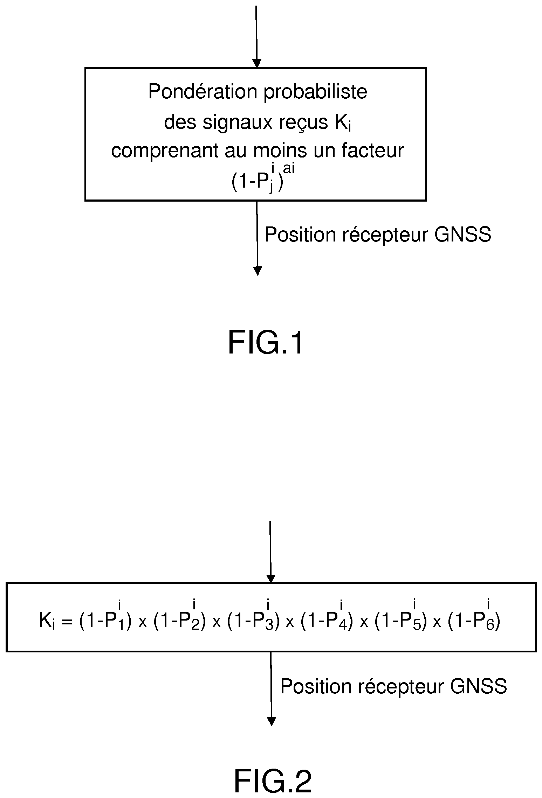

L'invention sera mieux comprise à l'étude de quelques modes de réalisation décrits à titre d'exemples nullement limitatifs et illustrés par les dessins annexés sur lequel les figures 1 et 2 illustrent schématiquement.

Il est proposé, comme illustré sur la figure 1, selon un aspect de l'invention, un procédé de détermination de la position d'un récepteur de système de navigation par satellites dans lequel on utilise une pondération probabiliste des signaux reçus, ladite pondération utilisant un coefficient $K_i$, pour chaque satellite d'indice i, ledit coefficient $K_i$ étant un produit de facteurs comprenant chacun une probabilité d'existence d'une perturbation, ledit coefficient $K_i$, pour chaque satellite d'indice i, comprenant au moins un facteur de la forme $\left(1 - P_j^i\right)^{a_i}$, variant de 1 à 6 dans laquelle: $P_1^i$

représente, pour le satellite d'indice i, une première probabilité que le signal reçu comprenne une combinaison d'une composante de signal non réfléchi et d'une composante de signal multi-trajet,

$P_2^i$ représente, pour le satellite d'indice i, une deuxième probabilité que le signal reçu comprenne uniquement une composante de signal multi-trajet,

$P_3^i$ représente, pour le satellite d'indice i, une troisième probabilité que le signal reçu soit brouillé par une interférence terrestre,

$P_4^i$ représente, pour le satellite d'indice i, une quatrième probabilité que le signal reçu comprenne une combinaison d'une composante d'un signal généré par un brouilleur au sol et d'une composante du signal nominal,

$P_5^i$ représente, pour le satellite d'indice i, une cinquième probabilité que le signal reçu ne soit pas en cohérence avec des conditions de réception précédentes dudit signal,

$P_6^i$ représente, pour le satellite d'indice i, une sixième probabilité que le signal reçu ne soit pas en cohérence avec une cartographie des environs, et

$a_i$ représente un réel positif

Typiquement, $a_i$ est un réel positif compris entre 0 et 3.

La pondération, comme illustrée sur la figure 2, peut utiliser un coefficient $K_i$, pour chaque satellite d'indice i, de la forme suivante:

$$K_i = \left(1 - P_1^i\right) \times \left(1 - P_2^i\right) \times \left(1 - P_3^i\right) \times \left(1 - P_4^i\right) \times \left(1 - P_5^i\right) \times \left(1 - P_6^i\right)$$

(les $a_i$ sont tous égaux à 1 en ce cas)

Bien entendu, en variante, le coefficient $K_i$ peut comprendre seulement une partie des facteurs de la relation précédente.

Lorsqu'un coefficient $K_i$ est inférieur à un premier seuil $S_1$, la détermination de la position du récepteur de système de navigation par satellites écarte les signaux reçus du satellite d'indice i. Cela permet d'éliminer des signaux pour lesquels la perturbation est considérée certaine ou quasi-certaine.

La détermination de la position du récepteur de système de navigation par satellites utilise une pondération des mesures des signaux émis par lesdits satellites de valeur respective $1/K_i$.

La première probabilité $P_1^i$ , pour le satellite d'indice i, que le signal reçu comprenne une combinaison d'une composante de signal non réfléchi et d'une composante de signal multi-trajet, utilise simultanément une boucle de poursuite de retard basée sur un discriminant tôt/tard d'écartement étroit, une boucle de poursuite de retard basée sur un discriminant tôt/tard d'écartement normal, et un écart entre les délais évalués par lesdites boucles.

Par exemple, la première probabilité $P_1^i$ peut, par exemple, être définie par les relations suivantes :

$$\begin{cases} \text{si } \mathrm{Abs}(\mathrm{DLL}_{\text{étroite}} - \mathrm{DLL}_{\text{normale}}) \geq a \text{ chip,} \\ \qquad\qquad \text{alors } P_1 = 0 \\ \\ \text{si } \mathrm{Abs}(\mathrm{DLL}_{\text{étroite}} - \mathrm{DLL}_{\text{normale}}) < a \text{ chip,} \\ \text{alors } P_1 = C_1 \times \mathrm{Abs}(\mathrm{DLL}_{\text{étroite}} - \mathrm{DLL}_{\text{normale}})/a \end{cases}$$

dans lesquelles :

$\mathrm{DLL}_{\text{étroite}}$ représente la synchronisation estimée par la boucle de poursuite de retard étroite, en s,
$\mathrm{DLL}_{\text{normale}}$ représente la synchronisation estimée par la boucle de poursuite de retard normale, en s,
a représente un coefficient d'écartement des boucles $\mathrm{DLL}_{\text{étroite}}$ et $\mathrm{DLL}_{\text{normale}}$, en chips, compris entre 0 et 1, valant par exemple 0.5 chip,
$C_1$ représente un premier coefficient compris entre 0.8 et 1, adimensionnel, pouvant valoir 0.9 pour un réglage du premier seuil S1 de rejet des mesures à 0.1.
et 1 chip représente l'intervalle de temps entre deux bits successifs du code d'étalement de spectre du système de navigation par satellites, en s.

Le symbole Abs représente bien entendu la fonction valeur absolue.

La première probabilité $P_1^i$ traduit un cas dans lequel le signal nominal est reçu dans de bonnes conditions, et qu'il est alors possible de remplacer le corrélateur classique dont la distance entre les points de corrélation est d'un demi-chip par un corrélateur étroit ou "narrow correlator" en langue anglaise, dont la distance entre les points de corrélation peut être plus courte, par exemple de 0.1 chip. La difficulté du corrélateur étroit est qu'il est plus sensible au bruit thermique, de sorte qu'on ne l'utilise pas de manière générale, mais il réussit en général à suivre un signal direct. L'intérêt principal est que si le signal réfléchi est reçu avec un décalage temporel équivalent à 0.4 chip, il est vu dans le corrélateur normal à 0.5 chip, mais il n'est pas vu par le corrélateur étroit à 0.1 chip. Ainsi, il est possible de traduire la probabilité d'être dans le cas d'un signal direct et dans un signal réfléchi par l'éloignement de la boucle de code DLL sur le corrélateur étroit $\mathrm{DLL}_{\text{étroit}}$ et la boucle de code sur le corrélateur normal $\mathrm{DLL}_{\text{normal}}$.

La deuxième probabilité $P_2^i$ que le signal reçu comprenne uniquement une composante de signal multi-trajet peut, par exemple, être définie par les relations suivantes :

$$\begin{cases} \text{si } \mathrm{Abs}(\mathrm{DLL}_{\text{étroite}} - \mathrm{DLL}_{\text{normale}}) < b \text{ chip,} \\ \qquad \text{alors } \mathrm{P}_2 = 0 \\[2mm] \text{si } \mathrm{Abs}(\mathrm{DLL}_{\text{étroite}} - \mathrm{DLL}_{\text{normale}}) > 1 \text{ chip,} \\ \qquad \text{alors } \mathrm{P}_2 = \mathrm{C}_2 \\[2mm] \text{sinon } \mathrm{P}_2 = \mathrm{C}_2 \times (\mathrm{Abs}(\mathrm{DLL}_{\text{étroite}} - \mathrm{DLL}_{\text{normale}}) - b)/b \end{cases}$$

dans lesquelles :

b représente un coefficient d'écartement des boucles $\mathrm{DLL}_{\text{étroite}}$ et $\mathrm{DLL}_{\text{normale}}$, en chips, compris entre 0 et 1, valant par exemple 0.5 chip,
$C_2$ représente un deuxième coefficient compris entre 0.8 et 1, adimensionnel, pouvant valoir 0.9 pour un réglage du premier seuil S1 de rejet des mesures S1 à 0.1.

La deuxième probabilité $P_2^i$ traduit le fait que le discriminant étroit ne reçoit plus le signal direct. Pour peu que le saut entre l'ancien signal direct et le signal réfléchi soit suffisamment grand (s'il est suffisamment petit, l'impact sur le positionnement est négligeable), la boucle sur le discriminant va décrocher, donc fournir une valeur quelconque sans aucun lien avec le signal reçu. Au contraire, pour le discriminant normal, le saut est petit et l'accrochage et la poursuite se font sur le signal réfléchi.

La troisième probabilité $P_3^i$ que le signal reçu soit brouillé par une interférence terrestre peut, par exemple, être définie par les relations suivantes :

$$\begin{cases} \text{si } (\mathrm{S/N_0})_{\text{mesuré}} > (\mathrm{S/N_0})_{\text{attendu}} - \mathrm{c,} \\ \qquad \text{alors } \mathrm{P}_3 = 0 \\[2mm] \text{si } (\mathrm{S/N_0})_{\text{mesuré}} < (\mathrm{S/N_0})_{\text{attendu}} - \mathrm{d,} \\ \qquad \text{alors } \mathrm{P}_3 = \mathrm{C}_3 \\[2mm] \text{sinon } \mathrm{P}_3 = \mathrm{C}_3 \times ((\mathrm{S/N_0})_{\text{attendu}} - (\mathrm{S/N_0})_{\text{mesuré}} - \mathrm{c})/(\mathrm{d} - \mathrm{c}) \end{cases}$$

dans lesquelles :

c représente un coefficient de rapport signal à bruit, en dB, compris entre 0.5 dB et 10 dB, valant par exemple 2 dB,
d représente un coefficient de rapport signal à bruit, en dB, compris entre 3 dB et 20 dB, valant par exemple 10 dB,
S représente la puissance du signal reçu, en w,
$N_0$ représente la puissance du bruit sur le signal reçu, en w, et
$C_3$ représente un troisième coefficient compris entre 0.8 et 1, adimensionnel, pouvant valoir 0.9 pour un réglage du premier seuil S1 de rejet des mesures à 0.1.

La troisième probabilité $P_3^i$ utilise une estimation $(\mathrm{S/N_0})_{\text{attendu}}$ du rapport signal sur bruit en considérant la géométrie de réception, connaissant la position approximative du récepteur, la position du satellite, et si possible un élément grossier d'anticipation des masquages. On compare ce rapport signal sur bruit estimé $(\mathrm{S/N_0})_{\text{attendu}}$ avec le rapport signal sur bruit mesuré $(\mathrm{S/N_0})_{\text{mesuré}}$, celui-ci étant obtenu par les techniques classiques de mesure de rapport signal sur bruit $\mathrm{S/N_0}$ en poursuite sur les signaux GNSS, par exemple en vérifiant la stabilité des boucles de poursuite (les valeurs de $\mathrm{S/N_0}$ sont en dB), et on vérifie si le rapport signal sur bruit $(\mathrm{S/N_0})_{\text{mesuré}}$, n'est pas beaucoup plus faible qu'attendu.

La quatrième probabilité $P_4^i$ que le signal reçu comprenne une combinaison d'une composante d'un signal généré par un brouilleur au sol et d'une composante du signal nominal peut, par exemple, être définie par les relations suivantes :

$$\begin{cases} \text{si Abs}\big(R_{att}(t,i) - R_{obs}(t,i)\big) < e \times \text{Abs}\big(R_{att}(t_{ref},i) - R_{obs}(t_{ref},i)\big), \\ \qquad\qquad \text{alors } P_4 = 0 \\[2ex] \text{si Abs}\big(R_{att}(t,i) - R_{obs}(t,i)\big) > f \times \text{Abs}\big(R_{att}(t_{ref},i) - R_{obs}(t_{ref},i)\big), \\ \qquad\qquad \text{alors } P_4 = C_4 \\[2ex] \text{sinon } P_4 = C_4 \times \left( \dfrac{\text{Abs}\big(R_{att}(t,i) - R_{obs}(t,i)\big)}{\text{Abs}\big(R_{att}(t_{ref},i) - R_{obs}(t_{ref},i)\big)} - \text{\textcircled{?}} \right) / (f - \text{\textcircled{?}}) \end{cases}$$

dans lesquelles :

$R_{att}(t,i)$ représente le résidu de la pseudo-distance attendue pour le satellite i à l'instant t, en km,
$R_{obs}(t,i)$ représente la pseudo-distance mesurée pour le satellite i à l'instant t, en km,
$t_{ref}$ représente un instant de référence antérieur à l'instant t,
e représente un coefficient de comparaison, adimensionnel, compris entre 1 et 10, valant par exemple 3,
f représente un coefficient de comparaison, adimensionnel, compris entre 3 et 20, valant par exemple 10,
et
$C_4$ représente un quatrième coefficient compris entre 0.8 et 1, adimensionnel, pouvant valoir 0.9 pour un réglage du premier seuil S1 de rejet des mesures à 0.1.

Un résidu de pseudo-distance est la différence entre la pseudo-distance mesurée et la pseudo-distance calculée d'après la position estimée du récepteur et la position du satellite connue par ses éphémérides.

La quatrième probabilité $P_4^i$ traduit le fait que le signal reçu reste fort, donc pas détectable par la troisième probabilité $P_3^i$, mais que ce n'est pas le bon. La quatrième probabilité $P_4^i$ propose de se focaliser sur une implémentation qui est une comparaison avec une localisation inertielle, technique utilisée dans le domaine civil, comme les boîtiers Ecotaxe pour donner un exemple précis. Il est possible de considérer que la position attendue $P_{att}(t)$ à un instant t est donnée par la propagation des mesures inertielles d'une position de référence établie (par combinaison GNSS (par exemple GPS) et Inertie) à un instant de référence $t_{ref}$ antérieur à t, par exemple $t_{ref} = t - 10s$. A partir de cette position attendue $P_{att}(t)$, et connaissant la position du satellite i par son éphéméride, il est possible de calculer la mesure de pseudo-distance attendue $R_{att}(t,i)$ pour ce satellite i à l'instant t, et la comparer avec la mesure observée ou mesurée $R_{obs}(t,i)$ pour le satellite i à l'instant t. Cette comparaison ou différence est appelée l'innovation, plus précisément l'opposé, à savoir la valeur mesurée à laquelle on soustrait la valeur attendue.) Il est également possible faire cette même comparaison au moment $t_{Ref}$. Si l'innovation est faible et surtout si elle dérive lentement entre $t_{Ref}$ et t, elle n'est pas suspecte, puisque les mesures GNSS sont affectées d'erreurs de type bruit, et les propagations inertielles sont affectées d'erreurs de type dérive. Si par contre, soudainement, la différence devient grande et/ou la dérive devient forte, cela devient sûrement un problème.

La cinquième probabilité $P_5^i$ que le signal reçu ne soit pas en cohérence avec des conditions de réception précédentes dudit signal, peut, par exemple, être définie par les relations suivantes :

$$\begin{cases} \text{si } V(t,i) < g \times V(t - t_1, i), \\ \qquad \text{alors } P_5 = 0 \\[2ex] \text{si } V(t,i) > h \times V(t - t_1, i), \\ \qquad \text{alors } P_5 = C_5 \\[2ex] \text{sinon } P_5 = C_5 \times (V(t,i)/V(t - t_1, i) - g)/(h - g) \end{cases}$$

dans lesquelles :

$t_1$ représente une durée, en s,

V(t, i) représente la variance des résidus des pseudo-distances desdits satellites entre l'instant t - Dt et t, Dt étant l'intervalle de calcul de la variance, par exemple 10 s et

g représente un coefficient de de comparaison, adimensionnel, compris entre 1 et 10, valant par exemple 3,

h représente un coefficient de de comparaison, adimensionnel, compris entre 3 et 20, valant par exemple 10,

$C_5$ représente un cinquième coefficient compris entre 0.8 et 1, adimensionnel, pouvant valoir 0.9 pour un réglage du premier seuil S1 de rejet des mesures à 0.1.

La cinquième probabilité $P_5^i$ considère la même métrique de base que la quatrième probabilité $P_4^i$, à savoir l'innovation des mesures de pseudo-distances par rapport à une position attendue établie par GNSS et inertie. En revanche, dans la cinquième probabilité $P_5^i$, on s'intéresse à un comportement de plus long terme, avec, par exemple, la variance de l'innovation sur une minute. On appelle ainsi V(t, i) la variance sur l'innovation pour toutes les mesures faites entre t - 60 s et t, sachant par exemple qu'on considère une mesure par seconde ($t_1$ peut valoir par exemple 60 s).

La sixième probabilité $P_6^i$ que le signal reçu ne soit pas en cohérence avec une cartographie des environs est définie par les relations suivantes :

$$\begin{cases} \text{si } \mathrm{Abs}(\mathrm{P_{mesurée}} - \mathrm{P_{attendue}}) < k, \\ \qquad \text{alors } \mathrm{P_6} = 0 \\ \\ \text{si } \mathrm{Abs}(\mathrm{P_{mesurée}} - \mathrm{P_{attendue}}) > l, \\ \qquad \text{alors } \mathrm{P_6} = \mathrm{C_6} \\ \\ \text{sinon } \mathrm{P_6} = (\mathrm{Abs}(\mathrm{P_{mesurée}} - \mathrm{P_{attendue}}) - \mathrm{k})/(l - \mathrm{k}) \end{cases}$$

dans lesquelles :

$\mathrm{P_{mesurée}}$ représente la puissance mesurée du signal reçu, en W,
$\mathrm{P_{attendue}}$ représente la puissance attendue du signal reçu, en W,
k représente un coefficient de puissance, en dBW, compris entre 0.5dBW et 3 dBW, valant par exemple 2 dBW,
I représente un coefficient de puissance, en dBW, compris entre 0.5 dBW et 3 dBW, valant par exemple 2 dBW,
$C_6$ représente un sixième coefficient compris entre 0.8 et 1, adimensionnel, pouvant valoir 0.9 pour un réglage du premier seuil S1 de rejet des mesuresà 0.1.

Pour la sixième probabilité $P_6^i$, il est considéré de disposer d'une cartographie 3D complète pour pouvoir estimer vraiment précisément la puissance attendue $\mathrm{P_{attendue}}$ du signal. Cette estimation dépend de l'angle d'élévation du satellite. On compare cette mesure (un peu comme dans la troisième probabilité $P_3^i$) avec une mesure de puissance sur le signal $\mathrm{P_{mesurée}}$. La différence avec la troisième probabilité $P_3^i$ est d'une part que l'on considère plutôt la puissance que le rapport signal à bruit, et d'autre part que l'on considère également suspectes les erreurs positives : si on a une puissance attendue $\mathrm{P_{attendue}}$ plus faible que la puissance mesuré $\mathrm{P_{mesurée}}$, cela signifie qu'il y a une incohérence (dans la position, dans la cartographie, ou dans l'origine du signal), et donc un risque.

Pour exemple d'illustration, on considère un exemple à sept satellites visibles, numérotés de 1 à 7.

Sur le satellite 1, il existe un très fort bruit par rapport au signal attendu à l'instant courant, le reste étant normal :

$P_3^i = 0.9; P_1^i = P_2^i = P_4^i = P_5^i = P_6^i = 0.$ On note $K_i$ la valeur de la pondération K pour le satellite i. On a donc K1 = 0.1.

Sur le satellite 2, il existe un multi-trajet avec ligne directe, le signal réfléchi étant d'assez faible puissance, le reste étant normal : $P_1^i = 0.5$, $P_3^i = 0.1$ (légère contribution du multi-trajet au bruit), $P_5^i = 0.1$ (la variance sur la minute courante où le multi-trajet est présent est plus forte que celle d'avant où on suppose que le multi-trajet était absent (cas d'une voiture en ville par exemple), $P_2^i = P_4^i = P_6^i = 0.$ On a alors K2 = 0.5 x 1 x 0.9 x 1 x 0.9 x 1 = 0.405.

Le satellite 3 n'est pas un vrai satellite, mais un brouilleur : $P_1^i = P_2^i = P_3^i = 0; P_5^i = 0$ (on considère que le brouilleur est là depuis plus d'une minute); $P_4^i = 0.8$ (le brouilleur est bien vu par $P_4^i$) et $P_6^i = 0.5$ (l'émetteur du brouilleur a fait en sorte que le rapport signal à bruit S/N$_0$ soit bon ( $P_3^i$ ne le voit pas), mais la puissance elle-même est trop forte). K$_3$ = 0.2 x 0.5 = 0.1.

Le satellite 4 est affecté par une bulle ionosphérique, et la mesure courante est dégradée en termes de retard pur. $P_1^i = P_2^i = P_3^i = P_6^i = 0$. La bulle étant courte dans le temps (disons 10 s), elle n'affecte que peu la variance moyennée sur toute la dernière minute $\left(P_5^i = 0.3\right)$, mais elle est plus visible par comparaison à la mesure précédente $\left(P_4^i = 0.5\right)$. K$_4$ = 0.5 x 0.7 = 0.35.

Les autres satellites ne sont pas perturbés.

Le travail est réalisé en deux étapes :

Si K$_i$ < 0.15, on élimine complètement le satellite : on élimine donc les satellites 1 et 3.

Pour les autres satellites, on considère une pondération des mesures complémentaires en proportion de K$_i$ : pour chaque satellite, on calcule une valeur de bruit de mesure estimé sigmaErreur(i), par exemple selon les équations du MOPS pour acronyme de Minimum Operational Performance Standards en langue anglaise (standard d'utilisation du GNSS dans l'aviation civile). Normalement, selon le MOPS, on résout ensuite par moindre carré la position en pondérant chaque pseudo-distance du satellite i par le bruit de mesure estimé sigmaErreur(i). On calcule de même le niveau de protection en additionnant le projeté géométrique (Nord, Est, Vertical) sur la position de ces sigmaErreur(i). Selon l'invention, on garde le même principe, mais en remplaçant sigmaErreur(i) par une valeur de bruit de mesure estimé pondéré de la probabilité de perturbation sigmaErreurPerturbation(i), donné par l'équation sigmaErreurPerturbation(i) = sigmaErreur(i)/K$_i$. Ainsi, dans le présent exemple, on garde le sigmaErreur(i) pour les satellites 5, 6 et 7, mais on multiplie par 1/K$_2$ = 2.47 celui du satellite 2 et par 1/K$_4$ = 2.86 celui du satellite 4.

En d'autres termes on pondère d'un facteur 1/K$_i$ les valeurs des signaux des satellites dont les coefficients K$_i$ sont retenus.

Il est également proposé un système de détermination de la position d'un récepteur de système d'un système de navigation par satellites, adapté pour mettre en oeuvre le procédé tel que précédemment décrit.

Les étapes du procédé décrit ci-dessus peuvent être effectuées par un ou plusieurs processeurs programmables d'exécution d'un programme informatique pour exécuter les fonctions de l'invention en opérant sur des données d'entrée et générant des de sortie.

Un programme informatique peut être écrit dans n'importe quelle forme de langage de programmation, y compris compilé ou langages interprétés, et le programme d'ordinateur peut être déployé sous n'importe quelle forme, y compris en tant que programme autonome ou en tant que sous-programme, l'élément ou autre unité appropriée pour une utilisation dans un environnement de calcul.

## Revendications

1. Procédé de détermination de la position d'un récepteur de système de navigation par satellites dans lequel on utilise une pondération probabiliste des signaux reçus, ladite pondération utilisant un coefficient $K_i$, pour chaque satellite d'indice i, ledit coefficient $K_i$ étant un produit de facteurs comprenant chacun une probabilité d'existence d'une perturbation, **caractérisé en ce que**

   ledit coefficient $K_i$, pour chaque satellite d'indice i, comprend au moins un facteur de la forme $\left(1 - P_j^i\right)^{a_i}$, j variant de 1 à 6 dans laquelle:

   $P_1^i$ représente, pour le satellite d'indice i, une première probabilité que le signal reçu comprenne une combinaison d'une composante de signal non réfléchi et d'une composante de signal multi-trajet,

   $P_2^i$ représente, pour le satellite d'indice i, une deuxième probabilité que le signal reçu comprenne uniquement une composante de signal multi-trajet, $P_3^i$ représente, pour le satellite d'indice i, une troisième probabilité que le signal reçu soit brouillé par une interférence terrestre,

   $P_4^i$ représente, pour le satellite d'indice i, une quatrième probabilité que le signal reçu comprenne une combinaison d'une composante d'un signal généré par un brouilleur au sol et d'une composante du signal nominal,

   $P_5^i$ représente, pour le satellite d'indice i, une cinquième probabilité que le signal reçu ne soit pas en cohérence avec des conditions de réception précédentes dudit signal,

$P_6^i$ représente, pour le satellite d'indice i, une sixième probabilité que le signal reçu ne soit pas en cohérence avec une cartographie des environs, et

$a_i$ représente un réel positif.

2. Procédé selon la revendication 1, dans lequel, lorsqu'un coefficient $K_i$ est inférieur à un premier seuil ($S_1$), ladite détermination de la position du récepteur de système de navigation par satellites écarte les signaux reçus du satellite d'indice i.

3. Procédé selon la revendication 1 ou 2, dans lequel ladite détermination de la position du récepteur de système de navigation par satellites utilise une pondération des mesures des signaux émis par lesdits satellites de valeur respective 1/$K_i$.

4. Procédé selon l'une des revendications 1 à 3, dans lequel la première probabilité $P_1^i$ , pour le satellite d'indice i, que le signal reçu comprenne une combinaison d'une composante de signal non réfléchi et d'une composante de signal multi-trajet, utilise simultanément une boucle de poursuite de retard basée sur un discriminant tôt/tard d'écartement étroit, une boucle de poursuite de retard basée sur un discriminant tôt/tard d'écartement normal, et un écart entre les délais évalués par lesdites boucles.

5. Procédé selon l'une des revendications 1 à 4, dans lequel la deuxième probabilité $P_2^i$ , pour le satellite d'indice i, que le signal reçu comprenne uniquement une composante de signal multi-trajet, utilise simultanément une boucle de poursuite de retard basée sur un discriminant tôt/tard d'écartement étroit, une boucle de poursuite de retard basée sur un discriminant tôt/tard d'écartement normal, et une variation temporelle d'un écart entre les délais évalués par lesdites boucles.

6. Procédé selon l'une des revendications 1 à 5, dans lequel la troisième probabilité $P_3^i$ , pour le satellite d'indice i, que le signal reçu soit brouillé par une interférence terrestre utilise un écart entre une mesure du rapport de la puissance du signal reçu sur la puissance du bruit sur le signal reçu et une estimation attendue du rapport de la puissance du signal reçu sur la puissance du bruit sur le signal reçu.

7. Procédé selon l'une des revendications 1 à 6, dans lequel la quatrième probabilité $P_4^i$ , pour le satellite d'indice i, que le signal reçu comprenne une combinaison d'une composante d'un signal généré par un brouilleur au sol et d'une composante du signal nominal utilise un écart entre une mesure de résidu de pseudo-distance et une estimation attendue de résidu de pseudo-distance.

8. Procédé selon l'une des revendications 1 à 7, dans lequel la cinquième probabilité $P_5^i$ , pour le satellite d'indice i, que le signal reçu ne soit pas en cohérence avec des conditions de réception précédentes dudit signal utilise une variation de la variance des résidus des pseudos-distances desdits satellites.

9. Procédé selon l'une des revendications 1 à 8, dans lequel la sixième probabilité $P_6^i$ , pour le satellite d'indice i, que le signal reçu ne soit pas en cohérence avec une cartographie des environs utilise un écart entre la puissance mesurée du signal reçu du satellite d'indice i et une estimation attendue de la puissance du signal reçu du satellite d'indice i.

10. Système de détermination de la position d'un récepteur de système d'un système de navigation par satellites, adapté pour mettre en oeuvre le procédé selon l'une des revendications précédentes.

**Patentansprüche**

1. Verfahren zum Bestimmen der Position eines Empfängers eines Satellitennavigationssystems, in dem probabilistisches Gewichten der empfangenen Signale angewendet wird, wobei zum Gewichten ein Koeffizient $K_i$ für jeden Satelliten mit Index i benutzt wird, wobei der Koeffizient $K_i$ ein Produkt von Faktoren ist, die jeweils eine Wahrscheinlichkeit des Vorliegens einer Störung umfassen, **dadurch gekennzeichnet, dass** der Koeffizient $K_i$, für jeden Sa-

telliten mit Index i, wenigstens einen Faktor der Form $\left(1 - P_j^i\right)^{a_i}$ umfasst, wobei j von 1 bis 6 variiert, wobei:

$P_1^i$ für den Satelliten mit Index i eine erste Wahrscheinlichkeit repräsentiert, dass das empfangene Signal eine Kombination aus einer nicht reflektierten Signalkomponente und einer Mehrweg-Signalkomponente umfasst;

$P_2^i$ für den Satelliten mit Index i eine zweite Wahrscheinlichkeit repräsentiert, dass das empfangene Signal nur eine Mehrweg-Signalkomponente umfasst;

$P_3^i$ für den Satelliten mit Index i eine dritte Wahrscheinlichkeit repräsentiert, dass das empfangene Signal durch eine terrestrische Interferenz gestört wird;

$P_4^i$ für den Satelliten mit Index i eine vierte Wahrscheinlichkeit repräsentiert, dass das empfangene Signal eine Kombination aus einer Komponente eines von einer Störquelle am Boden erzeugten Signals und aus einer Komponente des nominellen Signals umfasst;

$P_5^i$ für den Satelliten mit Index i eine fünfte Wahrscheinlichkeit repräsentiert, dass das empfangene Signal nicht mit den vorherigen Empfangsbedingungen für das Signal im Einklang ist;

$P_6^i$ für den Satelliten mit Index i eine sechste Wahrscheinlichkeit repräsentiert, dass das empfangene Signal nicht mit einer Karte der Umgebung im Einklang ist, und $a_i$ eine positive reale Zahl repräsentiert.

2. Verfahren nach Anspruch 1, bei dem, wenn ein Koeffizient $K_i$ kleiner ist als eine erste Schwelle (S$_1$), das Bestimmen der Position des Empfängers des Satellitennavigationssystems die von dem Satelliten mit Index i empfangenen Signale verwirft.

3. Verfahren nach Anspruch 1 oder 2, wobei das Bestimmen der Position des Empfängers des Satellitennavigationssystems eine Gewichtung der Messwerte der von den Satelliten gesendeten Signale mit einem jeweiligen Wert 1/$K_i$ benutzt.

4. Verfahren nach einem der Ansprüche 1 bis 3, wobei die erste Wahrscheinlichkeit $P_1^i$ für den Satelliten mit Index i, dass das empfangene Signal eine Kombination aus einer nicht reflektierten Signalkomponente und einer Mehrweg-Signalkomponente umfasst, gleichzeitig eine Verzögerungsverfolgungsschleife auf der Basis eines Früh/Spät-Diskriminanten mit schmaler Abweichung, eine Verzögerungsverfolgungsschleife auf der Basis eines Früh/Spät-Diskriminanten mit normaler Abweichung und einen Abstand zwischen den von den Schleifen beurteilten Verzögerungen benutzt.

5. Verfahren nach einem der Ansprüche 1 bis 4, wobei die zweite Wahrscheinlichkeit $P_2^i$ für den Satelliten mit Index i, dass das empfangene Signal nur eine Mehrweg-Signalkomponente umfasst, gleichzeitig eine Verzögerungsverfolgungsschleife auf der Basis einer Früh/Spät-diskriminanten mit schmaler Abweichung, eine Verzögerungsverfolgungsschleife auf der Basis eines Früh/Spät-diskriminanten mit normaler Abweichung und eine zeitliche Variation eines Abstands zwischen den von den Schleifen beurteilten Verzögerungen benutzt.

6. Verfahren nach einem der Ansprüche 1 bis 5, wobei die dritte Wahrscheinlichkeit $P_3^i$ für den Satelliten mit Index i, dass das empfangene Signal durch eine terrestrische Interferenz gestört ist, einen Abstand zwischen einem Messwert des Verhältnisses zwischen der Leistung des empfangenen Signals und der Leistung des Rauschens auf dem empfangenen Signal und einer erwarteten Schätzung des Verhältnisses zwischen der Leistung des empfangenen Signals und der Leistung des Rauschens auf dem empfangenen Signal benutzt.

7. Verfahren nach einem der Ansprüche 1 bis 6, wobei die vierte Wahrscheinlichkeit $P_4^i$ für den Satelliten mit Index i, dass das empfangene Signal eine Kombination aus einer Komponente eines Signals, erzeugt durch eine Störquelle am Boden, und einer Komponente des nominellen Signals umfasst, einen Abstand zwischen einem Messwert der Pseudorestdistanz und einer erwarteten Schätzung der Pseudorestdistanz benutzt.

8. Verfahren nach einem der Ansprüche 1 bis 7, wobei die fünfte Wahrscheinlichkeit $P_5^i$ für den Satelliten mit Index i, dass das empfangene Signal nicht mit den vorherigen Empfangsbedingungen für das Signal im Einklang ist, eine Variation der Varianz der Pseudorestdistanzen der Satelliten benutzt.

9. Verfahren nach einem der Ansprüche 1 bis 8, wobei die sechste Wahrscheinlichkeit $P_6^i$ für den Satelliten mit Index i, dass das empfangene Signal nicht mit einer Karte der Umgebung im Einklang ist, einen Abstand zwischen der gemessenen Leistung des empfangenen Signals des Satelliten mit Index i und einer erwarteten Schätzung der Leistung des empfangenen Signals des Satelliten mit Index i benutzt.

10. System zum Bestimmen der Position eines Systemempfängers eines Satellitennavigationssystems, ausgelegt zum Implementieren des Verfahrens nach einem der vorherigen Ansprüche.

**Claims**

1. A method for determining the position of a satellite navigation system receiver, wherein a probabilistic weighting of the received signals is used, said weighting using a coefficient $K_i$, for each satellite of index i, said coefficient $K_i$ being a product of factors each comprising a probability of the existence of a disturbance, **characterised in that** said coefficient $K_i$, for each satellite of index i, comprises at least one factor of the form $\left(1 - P_j^i\right)^{a_i}$, with j varying from 1 to 6, wherein:

   $P_1^i$ represents, for said satellite of index i, a first probability that the received signal comprises a combination of a non-reflected signal component and of a multiple path signal component;

   $P_2^i$ represents, for said satellite of index i, a second probability that the received signal comprises only one multiple path signal component;

   $P_3^i$ represents, for said satellite of index i, a third probability that the received signal is jammed by terrestrial interference;

   $P_4^i$ represents, for said satellite of index i, a fourth probability that the received signal comprises a combination of a component of a signal generated by a ground jammer and a component of the nominal signal;

   $P_5^i$ represents, for said satellite of index i, a fifth probability that the received signal is not consistent with the previous conditions for receiving said signal;

   $P_6^i$ represents, for said satellite of index i, a sixth probability that the received signal is not consistent with a map of the surrounding area and $a_i$ represents a positive real number.

2. The method according to claim 1, wherein, when a coefficient $K_i$ is below a first threshold ($S_1$), said determining of the position of said satellite navigation system receiver dismisses the signals received from said satellite of index i.

3. The method according to claim 1 or 2, wherein said determining of the position of said satellite navigation system receiver uses a weighting of the measurements of the signals transmitted by said satellites with a respective value $1/K_i$.

4. The method according to any one of claims 1 to 3, wherein said first probability $P_1^i$, for said satellite of index i, that the received signal comprises a combination of a non-reflected signal component and a multiple path signal component simultaneously uses a delay tracking loop based on a narrow deviation early/late discriminant, a delay tracking loop based on a normal deviation early/late discriminant and a deviation between the delays assessed by said loops.

5. The method according to any one of claims 1 to 4, wherein said second probability $P_2^i$, for said satellite of index i, that the received signal comprises only one multiple path signal component simultaneously uses a delay tracking loop based on a narrow deviation early/late discriminant, a delay tracking loop based on a normal deviation early/late discriminant and a temporal variation of a deviation between the delays assessed by said loops.

6. The method according to any one of claims 1 to 5, wherein said third probability $P_3^i$, for said satellite of index i, that the received signal is jammed by terrestrial interference uses a deviation between a measurement of the ratio of the power of the received signal to the power of the noise on the received signal and an anticipated estimate of the ratio of the power of the received signal to the power of the noise on the received signal.

7. The method according to any one of claims 1 to 6, wherein said fourth probablity $P_4^i$, for said satellite of index i, that the received signal comprises a combination of a component of a signal generated by a ground jammer and a component of the nominal signal uses a deviation between a measurement of the residual pseudo-distance and an anticipated estimate of the residual pseudo-distance.

8. The method according to any one of claims 1 to 7, wherein said fifth probablity $P_5^i$, for said satellite of index i, that the received signal is not consistent with the previous conditions for receiving said signal uses a variation of the variance of the residual pseudo-distances of said satellites.

9. The method according to any one of claims 1 to 8, wherein said sixth probablity $P_6^i$, for said satellite of index i, that the received signal is not consistent with a map of the surrounding area uses a deviation between the measured power of the received signal of said satellite of index i and an anticipated estimated of the power of the received signal of said satellite of index i.

10. A system for determining the position of a system receiver of a satellite navigation system, adapted to implement the method according to any one of the preceding claims.

Pondération probabiliste
des signaux reçus $K_i$
comprenant au moins un facteur
$(1-P_j^i)^{ai}$

Position récepteur GNSS

# FIG.1

$$K_i = (1-P_1^i) \times (1-P_2^i) \times (1-P_3^i) \times (1-P_4^i) \times (1-P_5^i) \times (1-P_6^i)$$

Position récepteur GNSS

# FIG.2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2037290 A1

- US 20040008139 A1